# EUROPEAN PATENT SPECIFICATION

(11) **EP 2 404 427 B1**
(45) Date of publication and mention of the grant of the patent: **16.01.2013**
(21) Application number: 10709924.4
(22) Date of filing: 24.02.2010
(51) Int. Cl.: H04L 29/06

(54) **METHOD AND APPARATUS FOR SECURING NETWORK COMMUNICATIONS**
VERFAHREN UND VORRICHTUNG ZUM SICHERN VON NETZWERKKOMMUNIKATION
PROCÉDÉ ET APPAREIL DE SÉCURISATION DE COMMUNICATIONS EN RÉSEAU

(30) Priority: 04.03.2009 GB 0903714
(43) Date of publication of application: 11.01.2012
(73) Proprietor: Hawkes, Michael Ian, Rudyard, Staffordshire ST13 8RH (GB)
(72) Inventor: Hawkes, Michael Ian, Rudyard, Staffordshire ST13 8RH (GB)
(74) Representative: Fearnside, Andrew Simon
(86) International application number: PCT/GB2010/050313
(87) International publication number: WO 2010/100466

(56) References cited:
- US-A1- 2006 212 928
- US-B2- 7 444 510

## Description

The present invention relates to methods and apparatus for securing network communications. In particular, though not exclusively, the invention relates to communications using a computer network or internetwork.

One of the most common methods for providing secure network access to network components (e.g. servers, such as internet servers etc) is that of "authentication". This aims to provide access to a given network component only to specific users (persons or network components/applications). A simple example is the requirement of a user login and password. The basis of this method is the assumption that only the user to whom a password is issued will ever be able to use that password and so any such use must be authentic. This provides only a low level of security since it may be a simple matter to obtain or use a password illegitimately.

An alternative method is Client Certification which employs client certificates, e.g. installed on users' web browsers or the like, to authenticate users. Only users with the correct certificate credentials may be granted access to a network component employing Client Certification methods.

A client certificate is typically issued by a Trusted Third Party (TTP) known as a Certificate Authority which checks whether or not the applicant for a certificate is trustworthy. If so, a certificate may be issued to the applicant. The Certificate Authority is thereby trusted to adequately authenticate users before issuing certificates to them. This means that network components relying on Client Certification need only check the validity of a certificate presented to them in order to authenticate the certificate holder (client), and do not need to authenticate the holder themselves.

Certificates may thus be used by clients to verify that they are whom/what they claim to be when seeking access to a network component requiring client certification before conferring access. However, certificates may fall into the hands of others, or may be altered in some way illegitimately.

Network systems typically need to maintain private and public certificates to establish a secure channel to allow network components to secure information sent to, or requested by, users. This, in turn, requires that the network components must manage the security relationship with any user, and know details about user equipment, typically including: the type of browser (or client software) connecting to the publisher, public security certificate details; certificate authorisation details; and, what level of security the client can support.

A user/client often must establish a relationship with the network component it wishes to access and many systems request that users 'log in' to the network component in order to establish this relationship. For mobile Internet systems, for example, this introduces an unnecessary step that often results in the loss of potential audience for the publisher.

US 7444 510 B2 is further prior art on securing network communications.

The present invention aims to provide means and methods which may be used to address one or more of these matters.

At its most general, the invention proposed is means and methods to provide verification of authenticity to an addressee or recipient of a network communication not directly from the source of the communication (e.g. a certificate offered by the source to the intended recipient) but, rather, independently and separately such as from a separate trusted third party (TTP). Most preferably, verification of authenticity is delivered, or means are arranged for its delivery, to the addressee or recipient of the network communication, e.g. from the TTP, via a communications route/path via which the source cannot communicate with the intended recipient. The source and/or recipient/addressee may send a request to the TTP to issue verification of the authenticity of a communication sent by the source (e.g. previously, contemporaneously, concurrently, or to be sent subsequently) to the recipient/addressee. Most preferably, the communication may be encrypted so as to be decryptable by the intended recipient only using information issued to the intended recipient, e.g. by the TTP, upon verification of the source of the network communication.

In this way, the invention may provide a verifier to actively and contemporaneously bear witness to the authenticity of a communication or the identity of a communicating network component. The invention may provide the digital equivalent of the function a Notary may perform in verifying physical signatures.

According to the present invention there is provided an apparatus and method as set forth in the appended claims. Other features of the invention will be apparent from the dependent claims, and the description which follows.

In a first of its aspects, the present invention may provide a verifier for verifying the authenticity of a communication sent via a communications network from a first network component to a second network component including input means arranged for receiving via the communications network an encrypted communication from the first network component,
key means operable to issue to a second network component a key associated with the first network component on condition that the verifier has verified the encrypted communication to be decryptable using the key thereby to enable the second network component to decrypt encrypted communications from the first network component sent independently of the verifier apparatus.

Preferably, the verifier is operable to communicate to the second network component an identifier which identifies the key as being associated with the first network component.

The encrypted communication from the first network component is preferably received by the verifier independently of the second network component. The second network component is preferably responsive to a communication received thereby from the first component (e.g. encrypted) to transmit to the verifier a request for verification of the authenticity of the communication it has received from the first component. In this way, most preferably, the first and second components may send communications in tandem to the verifier. Alternatively, the second network component may not be so responsive and may await receipt of verification from the verifier without seeking it.

In this way, a greater degree of security may be enabled by providing that the first network component initiates/requests an independent component (the verifier, e.g. a TTP) to provide authentication and communicate that authentication to the second network component independently of the first network component (e.g. via a network path/channel not involving the first network component).

The second component may be responsive to receipt of an encrypted communication from the first network component to retain, store or keep the communication in encrypted form (e.g. to defer decryption, or attempts thereat) and await receipt from the verifier of the key required for decryption of the communication. The second component may be responsive to receipt of a/the key from the verifier therewith to decrypt a stored encrypted message it has received from the first network component.

The web security manager preferably receives a key from the verifier containing a network component identifier.

The second network component may be, for example, a web security manager, network manager component or node, or the like. The first network component may be a component containing a network/web browser application operable to communicate, or request a communication channel, with the second component via the network. The verifier may comprise a verifier part or unit for receiving encrypted communications from the first component and verifying that such communication is decryptable using a key stored thereby, and security server means for issuing the key in response to a command from the verifier unit to do so. The security server means may be separate or separated from the verifier part by a communications channel therebetween. Communications/commands between the verifier and the security server may be encrypted. The communications channel may include a second verifier according to the invention in its first aspect arranged such that communications from the verifier to the security server must be independently verified by the second verifier. In this latter example, the verifier represents a first network component and the security server represents a second communications component.

Encrypted communications from the first component to the second component may contain a communication/message or the like intended for a third network component such as a web/network data manager or a web/network service provider. The second network component may be arranged to enable/provide forward communication of a message received from the first network component in encrypted form, and decrypted using a key provided by the verifier, on to an intended destination of the message via the network.

The verifier may be arranged to attempt decryption of a received encrypted communication using one or more keys stored thereby prior to receipt of the encrypted communication and to select the key to issue from amongst the one or more stored keys.

The verifier may be operable or further operable to conditionally issue the key to the second network component in response to a request thereto from the second network component to verify the authenticity of an encrypted communication from the first network component. The verifier may be further arranged to receive with the encrypted communication first identity data identifying the first network component, to receive from the second network component second identity data identifying a network component the subject of a verification request, to compare the first identity data to the second identity data and to issue the key on condition that the comparison reveals an identity match.

The verifier may be arranged to render the key to be issued to the second network component identifiable by the second network component as associated with the first network component. For example, use of a network component identifier such as a browser identifier, or the like, may be employed to this end.

The key means may be arranged to issue to the second network component a second key for use by the second network component and the first network component in subsequent encrypted communications therebetween. The second network component may be arranged to communicate the second key to the first network component.

The key means may be arranged to issue to the second network component a third key associated with the first network component for use thereby in encrypting subsequent communications for transmission to the verifier. The second network component may be arranged to communicate the third key to the first network component.

The verifier may be arranged to generate the key in response to a key request from the first network component and to communicate the requested key to the first network component for use thereby in encrypting communications to the verifier and the second network component.

The verifier may be arranged to generate the key based on credentials associated with the first network component provided thereby with the key request. For example, a higher level of encryption (e.g. No. of bits), or different types of encryption, may be employed to generate the key based on one or more credentials selected from: network component ID; browser ID; user ID; location of the network component (e.g. network location).

In a second of its aspects, the invention may provide a communications network including a verifier described above in relation to the invention in its first aspect.

The communications network may include the first network component arranged to generate the first identity data.

The first network component may contain the key and may be arranged to encrypt communications to the verifier and to a second network component therewith.

A communications network may include the second network component arranged to be responsive to an encrypted communication from the first network component to issue to the verifier a request to verify the authenticity of an encrypted communication.

The first network component may be arranged to issue with said encrypted communication first identity data identifying the first network component.

The second network component may be arranged to issue with the verification request second identity data identifying a network component the subject of a verification request.

The second network component may be arranged to receive from the verifier a second key for use by the second network component in encrypted communications with the first network component.

The second network component may be arranged to receive from the verifier, and to issue to the first network component, a third key associated with the first network component for use thereby in encrypting subsequent communications for transmission from the first network component to the verifier.

The first network component may be operable to issue to the verifier a request to generate the key for use thereby in encrypting communications to the verifier and the second network component.

The first network component may be arranged to issue with the key generation request one or more credentials associated with the first network component

In a third of its aspects, the invention may provide a method for verifying the authenticity of a communication sent via a communications network from a first network component to a second network component including receiving at a verifier an encrypted communication sent from the first network component via the communications network, verifying at the verifier that the encrypted communication is decryptable using a key associated with the first network component, issuing the key to the second network component thereby to enable the second network component to decrypt encrypted communications from the first network component sent independently of the verifier.

The method may include storing one or more keys at the verifier and therewith attempting decryption of the received encrypted, and selecting the issued key from amongst the one or more stored keys.

The method may include conditionally issuing the key to the second network component in response to a request from the second network component to verify the authenticity of an encrypted communication from the first network component.

The method may include receiving with said encrypted communication first identity data identifying the first network component, receiving at the verifier second identity data from the second network component identifying a network component the subject of a verification request, comparing at the verifier the first identity data to the second identity data and issuing the key on condition that the comparison reveals an identity match.

The method may include rendering the key to be issued to the second network component identifiable thereby as associated with the first network component.

The method may include issuing to the second network component a second key from the verifier and using the second key at the second network component and the first network component in subsequent encrypted communications therebetween.

The method may include issuing to the second network component a third key from the verifier associated with the first network component and using the third key thereat in encrypting subsequent communications for transmission to the verifier.

The method may include generating the key at the verifier in response to a key request from the first network component and communicating the key to the first network component for use thereby in encrypting communications to the verifier and the second network component.

The method may include generating the key based on credentials associated with the first network component provided thereby with the key request.

Exemplary, but non-limiting embodiments of the invention follow described with reference selected of the drawings in which:
Figure 1 schematically illustrates a web service provider and a user connected to it via a network security system;
Figure 2 schematically illustrates a browser, a web security manager and a web data manager communicating;
Figure 3 schematically illustrates steps of verifier-led registration;
Figure 4 schematically illustrates a topology of the apparatus illustrated in Figure 3;
Figure 5 schematically illustrates a plug-in structure;
Figure 6 illustrates a customer registration process.

In the drawings like reference numerals refer to like features.

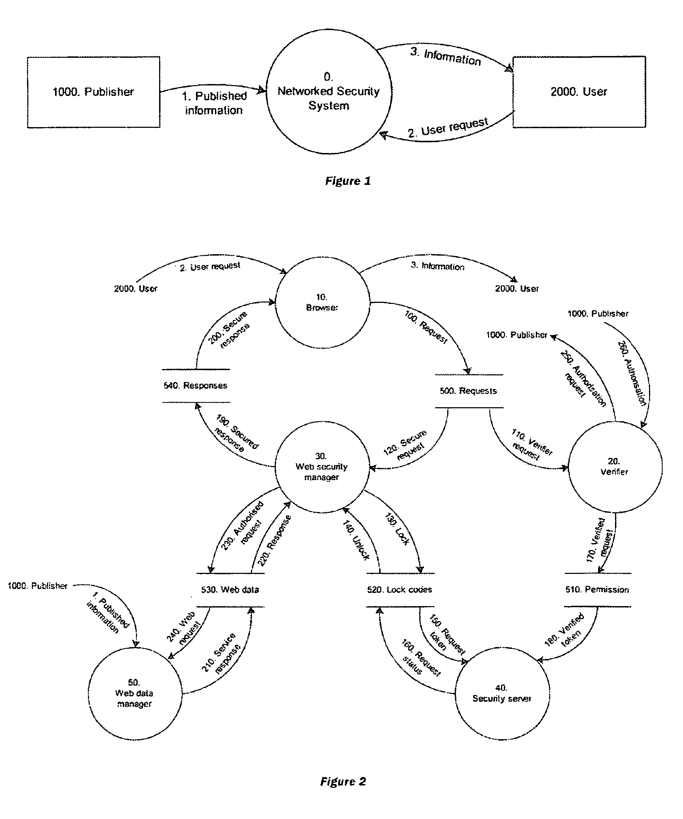

Figure 1 shows a diagrammatic representation of an embodiment the invention. Information publisher (1000), providing published information (1) to a user (2000) either directly or as a result of a user request (2) via a networked security system. The networked security system translates the published information (1) into information (3) in a format suitable for consumption by the user (2000). In this context, the term "user" includes individuals or systems that may use the information provided by the publisher.

As discussed in more detail below, embodiments of the invention may be arranged to secure Internet communications where an Internet user employs a browser to access secured resources existing behind a secure 'front-end' server. In a wider implementation, embodiments of the invention may apply to any component capable of generating two simultaneous network connections and having sufficient processing power to encrypt and decrypt communications data, e.g. such as in a two-tiered security model as described below.

Figure 2 shows an instance of an embodiment of the invention. which removes the need for certificates entirely.

A verifier apparatus (verifier unit 20 and security server 40) is illustrated for verifying the authenticity of a communication sent via a communications network from a first network component (browser 10) to a second network component (web security manager 30) including input means in the form of a verifier unit (20) arranged for receiving via the communications network an encrypted communication (110) from the first network component (browser 10). The security server of the verifier provides key means operable to issue to the second network component (web security manager 30) a key associated with the first network component (browser 10) on condition that the verifier unit has verified the encrypted communication (110) to be decryptable using the key thereby to enable the second network component (web security manager) to decrypt encrypted communications from the first network component (browser) sent independently of the verifier apparatus.

A web or network browser apparatus (10) is arranged to issue two simultaneous encrypted communication requests (100, becoming 110 and 120) via a data container 500: one to a web or network security manager apparatus(30), the other to the verifier unit (20) each linked to the browser via a web and/or network connection.

The web security manager is responsive to the encrypted request (120) to merely store the request initially by storing a lock request (130) in a lock code store (520) as it has insufficient information to decrypt the incoming request.

The verifier unit (20) is arranged to respond to the encrypted communication request to establish the identity of the browser (10) and the user (2000) by decrypting the incoming request (110) using a previously stored key associated with the browser (10).

The verifier unit (20) may optionally apply a series of business rules to the incoming request (110) by passing the request (110) to the publisher (1000) as an authentication request (250). The verifier unit may obtain an authentication (260) from the publisher (1000) in this case. This allows for new user or browser registration, for example.

Once the verifier unit (20) has established the validity of the verifier request (110), the verifier unit (20) is arranged to generate a suitable first 'new key' for use in encrypting/decrypting ongoing communication between the browser (10) and web security manager (30). The verifier unit also generates a second 'new key' for encrypting/decrypting communications between the browser and verifier, for use by the browser the next time the browser (10) is required to establish a connection to the verifier unit (20). The verifier unit is arranged to send these new keys via a permission store (510) to the security server (40). In addition to this, and along with the first and second 'new keys', the verifier unit issues to the security server, via the permission store (510) a further key to decrypt the encrypted communication request sent from the browser (10) to the web security manager (30) beforehand.

In some cases, the verifier unit (20) may be operable to send to the browser the newly generated further key - directly to the browser (10) - and encrypted using the key previously used to encrypt communications between the verifier and browser.

At this point, the security server (40) may issue verification that the user request (2) comes from a known user (2000) and a known browser (10) and that the verifier unit (20) has granted access to the resource requested from the user (2000). The web security manager is operable to identify, associate or link the verification it receives from the verifier as being associated with the user request (2) by using the common browser (10) ID accompanying, or part of, both the user request (2) and the verification signal. Request 110 indicates to the verifier that the browser wishes to communicate with the web security manager, but preferably does not contain information about the content of the request (100, 120) it has sent to the web security manager. The latter includes the browser (10) ID. Both the request to the verifier and to the web security manager contain the browser ID in unencrypted form (e.g. plain text). Item 130 contains a copy of the request (120) to the web security manager and a request to the security server (40) to obtain the key from the verifier (20).

Assuming that the security server (40) has verified the integrity of the user request as described above, the security server (40) is arranged to pass to the web security manager (30), via lock codes store (520), the necessary key to decrypt the encrypted communication request. Encryption may be based on any method of encryption, and public key encryption or private key encryption may be used.

The web security manager is operable subsequently to forward the user request (2) to the web data manager (50) as an authorised request (230, 240) for data which will provide web data (530) as in a conventional web-based transaction involviong a request for a web service, and a corresponding response (210, 220).

When the web data manager (50) has provided its data (530), the web security manager (30) is operable to generate a new key for the ongoing service-level encrypted communication, and then encrypts all this information using the key data retrieved thereby from the lock codes (530) store.

The web security manager (30) is arranged subsequently to send the now secured (encrypted) response (190) of the web data manager to the browser (10) decryptable at the browser as a secure response for presentation as information (3) to the user (2000).

The browser (10) may then decrypt the secure response (200) and extract all data (including the service-level key).

The browser (10) may replace the original key, used to establish communication with the verifier (20), with the 'service-level' key for use in encrypting and decrypting ongoing communication between the browser (10) and web security manager (30).

Such ongoing communications can now occur between the browser (10) and the web security manager (30) without needing to go through the verification process as described above.

At any point, the browser or security manager may change the keys used for ongoing service management by sending a new verification request or sending a new key within the encrypted service data such that the new key replaces the old.

The web service manager may enforce rules defined during the verification process, allowing things such as business rules or timer based connection management.

By implementing this type of security model, services can provide a high level of security that remains completely transparent (from a user perspective). Different services can employ different levels of security and publishers can define rules that allow for dynamic management of security profiles (automatically making information or services public after an embargo period elapses, for example). The model also allows infrastructure managers to control the flow of information by allowing the security model to route traffic to the most appropriate data manager.

A particular feature of the system described above is that of making two independent requests, both encrypted using e.g. a 'browser level' key. The initial user request (including login details) (figure 2, item 2) is encrypted using a predefined key that is later exchanged for a new key, once the verifier (20) can establish the credentials of the user and the validity of connection request. This removes a security weakness in current
'clear-text' service registrations.

A notable feature of the system is that of an external verification means sending its responses to an independent service, not known to the browser. This enables that the browser connects to a valid web security manager. The browser desirably has no knowledge of the security server address or the keys used to encrypt traffic between the verifier (20) and security server (40), or those used between the security server (40) and the web security manager (30). Thus, the browser preferably cannot 'spoof' a request to a web security manager and a false verifier preferably cannot 'spoof' a browser connection.

The system may also secure intra-component communication. In this case, the system may apply to all communication between respective components, e.g. with the verifier utilising a recursion-detection method to prevent infinite recursion. This would enable the protection of all internal communications data.

Either just the initial request or all requests sent from the user can employ this system and method.

In effect, the system allows for an initial security setup (using a browser-level key, that provides service level encryption keys for ongoing communication), or both an initial and ongoing connection verification process (where both browser and ongoing communication change keys for each request).

Browser services may convert data between the secured channel and a format that browsers understand. The example described above depicts a browser. However, preferred embodiments of the invention may employ an intermediary that converts the secured data into a format a browser 'understands'. In its simplest form, computers could use this as a local proxy server that automatically switches between secured and unsecured (e.g. standard Internet connections) transport streams as necessary.

Security models may include business rules. Unlike current models, preferred embodiments of the invention provide a method of introducing business rules as part of the overall security model - this may, for example, allow systems to vary security profiles dynamically without having to modify other systems or software. This also allows the verifier to re-route communications or prevent network access according to rules defined by individual publishers (for example, if a server load in the UK exceeds a certain threshold then route traffic to an alternate web data manager in the USA). This may separate the security model from the application and allows for a completely flexible security context where even encryption algorithms can change between components.

In order to use the system/method, users may install a protocol management component on the system used to connect to the secured network. This component may most preferably be required to register with a verifier in order to communicate with any web server manager.

Registration may cater for at least three scenarios:
Use in a private context where exactly one user requires access to a secured network 1. using exactly one device (for example, use by an employee using a corporate laptop to connect to the company network);
Public use, where an individual may require access to a service but via a shared computer; and,
Machine to machine communications, where no user interaction occurs but the service must encrypt all data carried by the underlying network.

The first in the above list provides the highest level of security as the verification process enables establishment of a relationship between the connecting device, the user and a specific service. This would provide a high level of security as the credentials used to establish a connection can rely on the use of a password or PIN as part of the encryption key (using a pre-stored key in combination with a user-entered PIN or password to encrypt the initial connection to the verifier).

The second provides a slightly lower standard of security as the initial connection relies only on a pre-stored key within the connecting device to establish the initial connection to the verifier. In this case, the service-level communication may use a user name and PIN or password in combination with the service-level key to secure data.

Implementations can define the level of security for the third method of registration. Services could, for example, prompt administrators for credentials to establish the initial communication between components, or use an embedded configuration item to supply registration credentials.

In each of the three cases listed above, the verifier may also base the acceptance of any request on either a set of business rules (typically defined by a publisher) or by an external service (usually operated by the publisher or a trusted third party - for example, age verification). This would allow the verifier to construct rules at a component level or at a global site level, as required. This approach also allows the verifier to establish connections with known trusted third parties that specialise in a particular aspect of security to ensure that each registration, and any subsequent authorisation requests, conform to the security requirements defined by the publisher.

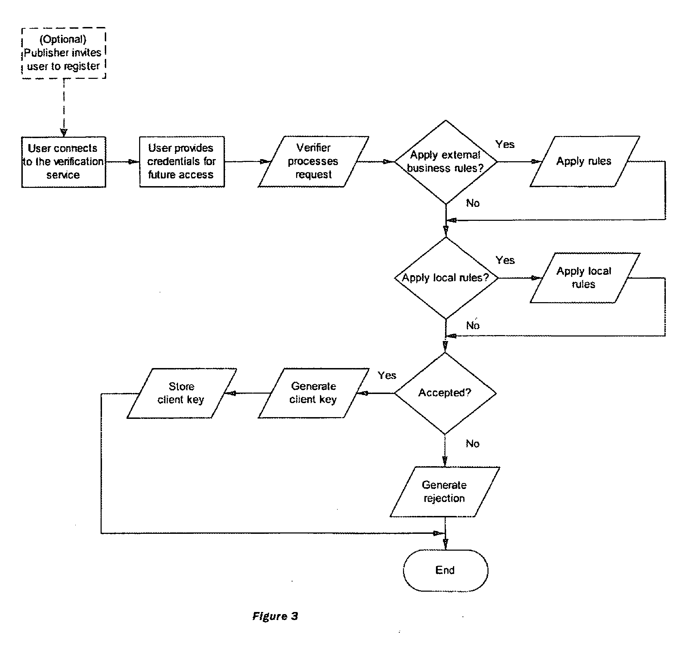

Figure 3 shows a typical implementation of the registration method. One aspect of preferred embodiments of the invention allows the publisher to upload one or more credentials to allow for easy migration from extant security systems. However, in figure 3, the user instantiates the request to the verification server. In this case, the user already has access to an installed component - the delivery of this component can utilise already existing transmission and installation method.

During installation of the secure component, the installer is arranged to generate a unique identifier for the component, typically based on details collected from the underlying hardware (such as a disk drive volume identifier or serial number). The installed component also contains a single use key used e.g. solely to send the initial registration data.

After providing a set of user credentials (typically a user name and password), the installed component is operable to send a request to a trusted verification service (typically, the installed component also sends the configuration record defining which verification service to connect to). The component preferably sends the component unique identifier in clear text with all other data encrypted; the component preferably should also employ a 'one-way hash' of the password and send the hash, rather than the full password within the encrypted registration payload.

At this point, the verifier establishes whether the user has permission to access the service. Typically, this occurs in two stages: by applying external business rules (for example, does the service recognise the credentials provided in step 2); and, a set of local (to the verifier) rules. This allows for a flexible method of controlling subscription and registration to services. However, in other embodiments of this invention, a variety of local and remote rules may apply in any sequence.

If the registration request satisfies all of the applied rules, the verifier generates a new key and a registration token. The verifier stores this for future use and encrypts this data (using the 'one-time use' key) before sending the encrypted data to the user's installed security component.

Any failed requests may generate a security exception and further business rules may then apply (for example to report the exception to a fraud detection service or reporting system).

For private contexts (where one user accesses the service from the same device each time), the verifier also stores the one-way hashed version of the users' PIN or password and uses this as an extension to the key generated by the verifier (the full key, therefore, comprises of aggregate of the generated key and the one-way hashed pin or password).

At this point, the installed security component has established a relationship with the verifier service and exchanged a key for future communications. Although the rules applied during registration may perform additional security validation steps, the registration process does not assume that the service and user have an established relationship until the user attempts to connect to the service. This 'one-time' registration process merely associates the security component with a verifier, not necessarily with any services that may use the verifier. Business rules may be used to determine whether the verifier should make any such association between user, component, verifier and component.

Note that the diagram assumes user-entry for establishing the initial credentials. Some embodiments of this invention may utilise pre-configured credentials to obviate this requirement.

Also, some implementations may be arranged to have the publisher provide the component keys, rather than leaving this to the verifier (this allows a public service to make an initial connection, but a closed or private service to perform and manage the verification).

By taking this approach to initial registration, information publishers may have access to a system that separates security from applications and provides a common security framework that can support granular control of security. Further, this method introduces the concept of 'security farms', where trusted third parties can act on behalf of multiple secure services (for example, a single authority can provide the security for children wanting to access school systems on behalf of the education authorities, saving each authority the effort required to vet and secure each user to numerous individual systems).

The external rules may also allow services to federate user credentials (allowing a single log-in to multiple services), with each publisher capable of controlling their own data security level (for example, in a police environment - a single log-in would suffice to access national databases but each database publisher can control the level of access required to obtain data from that specific system).

Once a user has registered an installed security component, the component may request a connection to a specific service.

In order to associate a service with a security context, publishers may register a service identifier and the route to the security server used to service any requests. Optionally, publishers may provide business rules (or a link to a computer capable of enforcing rules) that impose restrictions on access
or user-registration.

When using preferred embodiments of the invention, users may see very little difference to other security systems commercially available. However, the underlying method/system preferably uses a two-tiered security model: one to protect the initial connection, and a higher level of security to deal with intra-service communication.

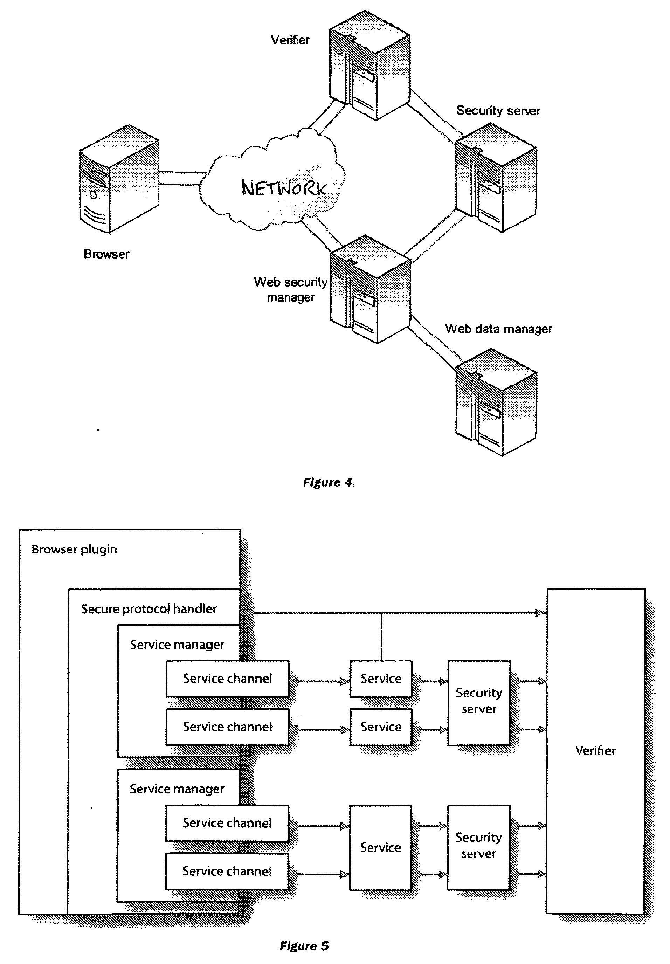

Figure 4 shows a typical implementation of the secure component in a browser, although other embodiments may use different ways of implementing this method. In figure 4, a browser establishes
two connections: one to a verifier, the other to a web-security manager.

The web security manager and verifier can both communicate with a security server but the browser has no reference to this, or the web data manager with which the web security manager is able to communicate. While figure 4 shows the security server and web security manager as two distinct devices, some embodiments may use a single device, or multiple devices to perform these functions.

Instead of sending a single request to a single web-server e.g. via a web data manager (as in current methods), this embodiment of the invention introduces encryption for both the initial connection to a web security manager and introduces a second encrypted request that the browser sends to an independent verifier. Until an independent security server verifies the integrity of the user, and has determined/ensured that the browser has made a matching request to the web security manager, the web data manager remains unaware that a browser connection request exists (removing potential denial-of-service attacks against corporate servers). In another embodiment of this invention, the web security manager can provide additional business rules processing capability (this would allow, for example, automatically rerouting requests to alternate web data managers should security rules dictate - or to facilitate seamless fail-over from one web data management site to another).

This embodiment of the invention defines three primary security processes:
the establishment of a secured communication channel through an independent trusted third party that validates preferably all devices (and, optionally, users) involved in the communication;
the establishment of a second 'service-specific' communication channel that uses the first channel (defined in step (1), above) to exchange security credentials and control access to data;
the provision of a series of rules that can control e.g. some or every single ongoing request for information at a granular level, or dynamically change the security context for published information based on business rules defined by the information publisher or the browser user (for example, allowing parents to set a security context that automatically prohibits data unsuitable for children, but allows all other data to pass through).

This following discussion assumes that:
a user (or computer system) has registered a component with a verifier;
an information publisher has registered a publishing service with a verifier; and,
the 'Browser component' has successfully registered itself and has an initial connection key.

Creating a secure channel will now be discussed.

To aid clarity, this document refers to securing Internet browsing, however the methods described can equally apply to other networking systems not reliant on the Internet or associated technologies.

Figure 5 shows a security component representing one possible implementation of preferred embodiments of this invention. In this diagram, an embodiment of the secure component may act as a plug-in to an Internet browser, being activated by a MIME type protocol identifier such as "secure:". This suggests that a browser may have one or more instances of a security protocol handler.

The security protocol handler preferably assumes responsibility for establishing the initial communication channel between a service hosted within a web security manager and the verifier service. At this point, this embodiment assumes that a service-specific handler (the service manager, in figure 5), will then create as many secure channels as required. The verifier will establish the authenticity of each 'browser-level' request and then pass the appropriate credentials to the security servers in order to allow the service to operate.

Taking this approach allows the browser to establish multiple secure connections, each potentially using different encryption algorithms or verification services. Each browser could also store information about specific services to allow security managers to 'lock down' browsers to specific verifiers or users.

Service provider registration will now be discussed.

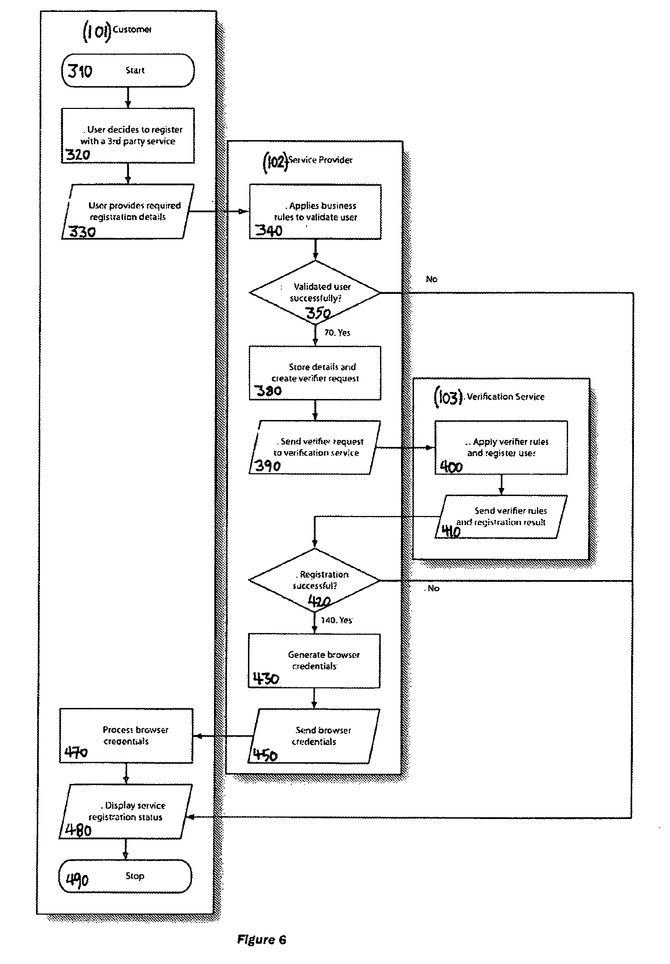

In another embodiment, a service provider may wish to perform the verification tasks before granting access to customers. Figure 6 shows such an example.

In this case, a customer (101) contacts a service provider (102) to enrol for a service or to access restricted information. The customer (101) provides any required data to the service provider (102) in order for the service provider (102) to apply a set of business rules (340) to determine whether the customer (101) should gain access to the service provider's data.

Assuming that the customer (101) passes all tests defined in the service provider's rules (340, 350), the service provider (102) stores all relevant customer data (380) and creates a verifier request that includes a unique token used to associate the customer (101) to a specific instance of the customer data subsequently held by the verification service (103). The customer never gains access to this unique token, thus preventing a customer 'spoofing' a request from a verification service.

At this point, the verification service (103) can run an additional set of rules to further validate the user data before storing the user token for future use. The verification service (103) then sends the result of both the rules-check and any user status data generated during the verifier rules process. The communication between the service provider (102) and verification service (103) has its own encryption layer (possibly established using methods according to embodiments of the invention) to prevent interception or modification of the registration results by malicious third parties.

Provided that the both the service provider and verification service accept the registration request (420), the service provider generates a unique token and encryption keys for use specifically with this service (item 450). The service can, in preferred embodiments, also define whether the user has access to the service from one of the following types of browser instance:

A single user registering a single computer for use with the service (the most secure level as this creates an association between the user, the browser instance on a specific computer and the service); or,
A single user registering from a group of known computers (for example, a works desk top and a laptop, thus providing an association between a user, a group of machines and a specific service); or,
A single user registering on a public or communal computer system where the service can only verify an association between the user and the service provider; or,
A group of users accessing a service from either dedicated computers or public computers.

Having established the type of connection (and the associated security level), the service provider can send appropriate browser credentials (460) to the customer's browser. Assuming that the registration process was completed satisfactorily, the customer's browser processes the security credentials to establish a secure connection with the service provider (470).

Having established the status of the registration process, the browser can display the service registration status (480) and, if registered, the browser has sufficient data to establish an encrypted channel for subsequent communication with the service provider.

Commercial usage shall now be discussed.

In order to establish a secure connection, a browser may ask for a resource locator (for example, "isec://myservice.com") optionally along with a generated transaction reference' user name and password. The browser may use the password in addition to the key stored within the browser (provided during browser registration) to encrypt the remainder of the data required by the service provider. Note that the browser does not need to send the password as this is preferably used as part of the key to encrypt the request payload. By using e.g. a checksum or cyclic redundancy code (or similar method), the service provider and verifier have sufficient information to verify the integrity of the payload and determine whether the supplied password and browser key allowed the browser to encrypt the data correctly.

The browser sends this encrypted data along with a unique browser identifier (also provided during the registration process) to the service provider (this ensures that this method secures all initial requests, unlike current certificate exchange methods). The browser also sends its unique identifier
and the encrypted user name to the verifier.

At this point, the service provider does not have the key required to decrypt the request data it has received from the browser. Therefore, it preferably sends the request to a security server to await validation. This frees the front-end server from any additional processing overhead.

The verifier decrypts the user name using the browser identifier and a pre-stored hashed version of the browser-level password (stored during registration). The verifier is operable to then check that the user has an association with the service provider resource requested by the browser.

Assuming that the service provider registered the specific user (and, optionally, the browser) and granted access to the resource requested, the verifier may run any additional business rules and pass the result to a security server over a secured network (possibly employing this method).

The security server now has sufficient data to decrypt the original data sent to it. The security server decrypts the data and verifies the integrity of the data (possibly by using a cyclic redundancy or similar method). If these checks succeed, the security server sends the unencrypted data to the web data manager, optionally through the web security manager, and sends a success status indicator to both the verifier and the web security manager.

The verifier then encrypts a new key for use in subsequent communications with the browser, using the same credentials originally stored for the browser. Both the browser and the verifier store this new key for use when establishing a new verification request. This ensures the uniqueness of every request.

The web security manager passes the decrypted request to the web data manager and awaits a response. When it receives the response, the web security manager encrypts the response using

the key provided by the security manager along with a new key for use with the next request.

Subsequent requests that do not require full verification then use this newly generated key to encrypt traffic, with each response providing a new key for use with the next request.

Some embodiments may use a second password to encrypt the service-level data (the first used to authenticate the browser and initiate connections to the service). This second password can operate with an optional hidden browser password for use in public locations (the browser establishes its own secure channel for the initial request but has insufficient data to decrypt the service-level message).

This embodiment suggests the use of two protocol identifiers such as "secure:" and "isec:" to advise a browser whether to request a full 'verified' service (passing through the full verifier process), or to use a 'continuing' secure context where, following an initial verification request, all subsequent requests merely pass through the web security manager thus reducing the impact of the dual-method employed to establish initial connections. This approach allows publishers to define the level of security required on a per-resource basis.

For example, a request starting with the form "secure://myservice.com" would demand a full verification process; while "isec:/myservice.com" would use the already established channel (forcing the browser to perform a full verification, should the channel not already exist) and leaving the standard 'http' style resource locators for unsecured data.

Note: the uses of the format 'secure:' and 'isec:' are for illustration purposes only. Other embodiments may use other names or methods for describing the different levels of security required for secure communication.

Note that while the following refers to a 'browser plug-in' other embodiments may utilise different technologies or methods of implementation.

In order to establish a unique identifier for each browser 'plug-in', the use may be made of either a 'global unique identifier' (GUID) at a software or hardware level) possibly based on the configuration of the component installation device or a dedicated hardware identifier); or, a GUID generated by the verifier service upon initial registration.

When used with a hardware-based GUID (either generated or provided in a hardware device), a browser-plug in, according to preferred embodiments of the invention, includes this information as part of the initial encrypted payload sent to the verifier. This provides a mechanism to identify the hardware, browser and user, if required.

Further, the browser plug-in may have its own security rules, possibly stored within the plug-in components data store, ideally in an encrypted form. This allows, for example, a parent to set a 'safe list' of contacts in a secure 'chat' environment, or restrict access to Internet components independently of the rules defined within the verifier or publisher.

By having a local security rules 'engine', a local set of 'browser rules' can also base rules on a shared security policy that allows an organisation (such as a school or corporate environment) to create safe-lists for specific browsers, this preventing inadvertent access to unsuitable Internet resources.

Resetting browser instances is discussed below.

As this method may depend on several communicating parties to secure a service, the browser may require resetting should keys get out of alignment or messages fail to respond. The rules engines in both the browser and verifier service can provide the 'business rules' to follow when a browser plug-in issues a 'reset' request.

The standard method for resetting a browser requires the user to instigate a 'browser plug-in reset' request. At this point, the verifier preferably issues a new browser GUID or requests a new GUID from the browser plug-in (depending on the rules for the previously authorised conenctions).

Both the browser plug-in and the verifier preferably then run a set of rules against all known and previously authorised sites to either re-enable them to use the new browser identifier, or, to send re-registration requests to each service that previously used the 'old' browser plug-in GUID.

At the same time, the verifier preferably marks the 'old' GUID as 'expired' and any requests coming from the 'old' browser plug-in GUID thereby cause a security exception, thus removing risks associated with impersonation or attempts to copy browser plug-in's to other devices. This method also ensures that verifiers
can maintain an accurate audit trail of browser reset and registration requests.

If the rules so dictate, the verifier can also refer reset requests to publishers to allow them to re-establish the integrity of any service user.

Publisher transmissions are now discussed.

In order to 'push' secure content to browsers or update the browser component itself, service providers or verifiers can issue updates by reversing the usual request cycle (pushing a message to a browser by sending it an encrypted 'alert' that requires the verifier key to encrypt the alert). The browser can then establish a secure connection in the normal way to obtain an update.

In this instance, the publisher requests a key from a verifier (using a secure channel) and uses this to encrypt a 'push' or alert message to the browser plug-in. Upon receipt of the alert, the browser requests the decryption key from the verifier using the methods defined previously.

The embodiments of the invention described herein present a method of securing information sent over a network of computer systems without the need for digital certificates or other complex requirements. There is provided a method of identifying all parties in any network communication in order to verify the integrity of communications and the authenticity of requests or responses controlled by the methods described within this document.

Most prior security models utilise methods based on parties obtaining and managing certificates from verification service providers. These certificates often expire or require significant management effort to maintain a level of security that protects software connecting to a service, rather than protecting the actual software users.

The method described herein provides a security framework that can operate entirely within a corporate data centre (allowing companies to 'own' the security system used by their services), or as part of a larger shared service hosted by a trusted third party. Embodiments of the invention allow each component to have a different level of security to other components or data, enabling concurrent delivery of secured and unsecured items over the same network transport channel. Proposed methods also allow a software service to operate independently of another. This enables isolated yet concurrently operating security contexts, all using e.g. a single network connection.

By providing multiple security contexts, there are provided methods to support public computer access (those devices used by more than one person) and private contexts (for systems locked down to support exactly one user, a corporate laptop computer, for example). The methods described can apply to provide security between systems without user interaction.

There is also provided a mechanism to deliver content to specific users of specific devices within a given time period - allowing, for example, the delivery of media or other streaming content in a secure environment where only a licensed user of a licensed device can access published information. This approach reduces the computation overhead required by traditional encryption services, thus reducing power consumption and, potentially, the number of devices needed to maintain a security boundary.

While disclosures herein refer to Internet communications, the methods described may also apply to other communication systems.

The foregoing description provides exemplary embodiments. Variants to, and modification of, those embodiments such as would be readily apparent to the skilled person are encompassed within the scope of the invention e.g. such as is defined by the claims.

## Claims

1. A verifier for verifying the authenticity of a communication sent via a communications network from a first network component to a second network component including:
input means arranged for receiving via the communications network an encrypted communication from a said first network component;
key means operable to issue to a said second network component a key associated with the first network component on condition that the verifier has verified the encrypted communication to be decryptable using said key thereby to enable the second network component to decrypt encrypted communications from the first network component sent independently of the verifier apparatus.

2. A verifier according to any preceding claim in which the verifier is arranged to attempt decryption of a received encrypted communication using one or more keys stored thereby prior to receipt of the encrypted communication and to select the key to issue from amongst the one or more stored keys.

3. A verifier according to any preceding claim further operable to conditionally issue said key to a said second network component in response to a request thereto from the second network component to verify the authenticity of an encrypted communication from the first network component.

4. A verifier according to Claim 3 further arranged to receive with said encrypted communication first identity data identifying the first network component, to receive from a said second network component second identity data identifying a network component the subject of a verification request, to compare the first identity data to the second identity data and to issue said key on condition that the comparison reveals an identity match.

5. A verifier according to any preceding claim in which the key means is arranged to issue to the second network component a second key for use by the second network component and the first network component in subsequent encrypted communications therebetween.

6. A verifier according to any preceding claim in which the key means is arranged to issue to the second network component a third key associated with the first network component for use thereby in encrypting subsequent communications for transmission to the verifier.

7. A verifier according to any preceding claim arranged to generate the key in response to a key request from the first network component and to communicate the key to the first network component for use thereby in encrypting communications to the verifier and the second network component.

8. A verifier according to Claim 7 arranged to generate the key based on credentials associated with the first network component provided thereby with the key request.

9. A communications network including a verifier according to any preceding claim.

10. A method for verifying the authenticity of a communication sent via a communications network from a first network component to a second network component including:
receiving at a verifier an encrypted communication sent from the first network component via the communications network;
verifying at the verifier that the encrypted communication is decryptable using a key associated with the first network component; and subsequently,
issuing the key to the second network component thereby to enable the second network component to decrypt encrypted communications from the first network component sent independently of the verifier.

11. A method according to Claim 10 including storing one or more keys at the verifier and therewith attempting decryption of the received encrypted, and selecting the issued key from amongst the one or more stored keys.

12. A method according to any of claims 10 to 11 including conditionally issuing the key to the second network component in response to a request from the second network component to verify the authenticity of an encrypted communication from the first network component.

13. A method according to Claim 12 including receiving with said encrypted communication first identity data identifying the first network component, receiving at the verifier second identity data from the second network component identifying a network component the subject of a verification request, comparing at the verifier the first identity data to the second identity data and issuing the key on condition that the comparison reveals an identity match.

14. A method according to any of claims 10 to 13 including issuing to the second network component a second key from the verifier and using the second key at the second network component and the first network component in subsequent encrypted communications therebetween.

15. A computer program product containing computer program means including instructions executable on a computer(s) to implement the method according to any of claims 10 to 14.

16. A one or more computers programmed with computer program means including instructions arranged, when executed, to implement the method according to any of claims 10 to 14.

17. A network of computers programmed with computer program means including instructions arranged, when executed, to implement the method according to any of claims 10 to 14.

## Patentansprüche

1. Prüfgerät zum Überprüfen der Authentizität einer Kommunikation, die über ein Kommunikationsnetz von einer ersten Netzkomponente zu einer zweiten Netzkomponente gesendet wird, enthaltend:
Eingabemittel, die zum Empfangen einer verschlüsselten Kommunikation von der ersten Netzkomponente über das Kommunikationsnetz ausgebildet sind;
Verschlüsselungsmittel, die betreibbar sind zum Ausgeben eines Schlüssels, der der ersten Netzkomponente zugeordnet ist, an die zweite Netzkomponente unter der Bedingung, dass das Prüfgerät die verschlüsselte Kommunikation, die mit Hilfe des Schlüssels entschlüsselt werden soll, überprüft hat, wodurch die zweite Netzkomponente zum Entschlüsseln verschlüsselter Kommunikationen von der ersten Netzkomponente freigegeben wird, die unabhängig von dem Prüfgerät gesendet werden.

2. Prüfgerät nach einem vorangehenden Anspruch, wobei das Prüfgerät für einen Versuch einer Entschlüsselung einer empfangenen verschlüsselten Kommunikation unter Verwendung eines oder mehrerer Schlüssel, der bzw. die dadurch vor dem Empfang der verschlüsselten Kommunikation gespeichert wurden, ausgebildet ist sowie zum Auswählen des Schlüssels für die Ausgabe aus dem einen oder den mehreren gespeicherten Schlüsseln.

3. Prüfgerät nach einem vorangehenden Anspruch, das des Weiteren bedienbar ist, um den Schlüssel bedingt an die zweite Netzkomponente als Antwort auf eine Anfrage darüber von der zweiten Netzkomponente auszugeben, die Authentizität einer verschlüsselten Kommunikation von der ersten Netzkomponente zu prüfen.

4. Prüfgerät nach Anspruch 3, das des Weiteren ausgebildet ist für einen Empfang von ersten Identitätsdaten, die die erste Netzkomponente identifizieren, mit der verschlüsselten Kommunikation, für einen Empfang von zweiten Identitätsdaten, die eine Netzkomponente identifizieren, die Gegenstand einer Überprüfungsanfrage ist, von der zweiten Netzkomponente, für einen Vergleich der ersten Identitätsdaten mit den zweiten Identitätsdaten und zum Ausgeben des Schlüssels unter der Bedingung, dass der Vergleich eine Identitätsübereinstimmung ergibt.

5. Prüfgerät nach einem vorangehenden Anspruch, wobei das Schlüsselmittel zum Ausgeben eines zweiten Schlüssels an die zweite Netzkomponente ausgebildet ist, der von der zweiten Netzkomponente und der ersten Netzkomponente in folgenden verschlüsselten Kommunikationen zwischen ihnen verwendet wird.

6. Prüfgerät nach einem vorangehenden Anspruch, wobei das Schlüsselmittel zum Ausgeben eines dritten Schlüssels, der der ersten Netzkomponente zugeordnet ist, an die zweite Netzkomponente ausgebildet ist, so dass dieser in einer Verschlüsselung folgender Kommunikationen zur Übertragung an das Prüfgerät verwendet wird.

7. Prüfgerät nach einem vorangehenden Anspruch, das zum Erzeugen des Schlüssels als Antwort auf eine Schlüsselanfrage von der ersten Netzkomponente und zum Kommunizieren des Schlüssels zur ersten Netzkomponente ausgebildet ist, um dadurch in der Verschlüsselung von Kommunikationen zum Prüfgerät und der zweiten Netzkomponente verwendet zu werden.

8. Prüfgerät nach Anspruch 7, das zum Erzeugen des Schlüssels auf der Basis von Berechtigungsnachweisen ausgebildet ist, die der ersten Netzkomponente zugeordnet sind, die dadurch mit der Schlüsselanfrage geschickt werden.

9. Kommunikationsnetz, das ein Prüfgerät nach einem vorangehenden Anspruch enthält.

10. Verfahren zum Überprüfen der Authentizität einer Kommunikation, die über ein Kommunikationsnetz von einer ersten Netzkomponente zu einer zweiten Netzkomponente gesendet wird, enthaltend:
Empfangen einer verschlüsselten Kommunikation, die von der ersten Netzkomponente über das Kommunikationsnetz gesendet wird, beim Prüfgerät;
Überprüfen am Prüfgerät, dass die verschlüsselte Kommunikation mit einem Schlüssel entschlüsselt werden kann, der der ersten Netzkomponente zugeordnet ist; und anschließend
Ausgeben des Schlüssels an die zweite Netzkomponente, wodurch die zweite Netzkomponente zum Entschlüsseln verschlüsselter Kommunikationen von der ersten Netzkomponente freigegeben wird, die unabhängig von dem Prüfgerät gesendet werden.

11. Verfahren nach Anspruch 10, enthaltend das Speichern eines oder mehrerer Schlüssel beim Prüfgerät und den Versuch einer Entschlüsselung der empfangenen verschlüsselten Kommunikation mit diesen und Auswählen des ausgegebenen Schlüssels aus dem einen oder den mehreren gespeicherten Schlüsseln.

12. Verfahren nach einem der Ansprüche 10 bis 11, enthaltend das bedingte Ausgeben des Schlüssels an die zweite Netzkomponente als Antwort auf eine Anfrage von der zweiten Netzkomponente, die Authentizität einer verschlüsselten Kommunikation von der ersten Netzkomponente zu prüfen.

13. Verfahren nach Anspruch 12, enthaltend das Empfangen von ersten Identitätsdaten, die die erste Netzkomponente identifizieren, mit der verschlüsselten Kommunikation, das Empfangen von zweiten Identitätsdaten, die eine Netzkomponente identifizieren, die Gegenstand einer Überprüfungsanfrage ist, von der zweiten Netzkomponente beim Prüfgerät, das Vergleichen beim Prüfgerät der ersten Identitätsdaten mit den zweiten Identitätsdaten und das Ausgeben des Schlüssels unter der Bedingung, dass der Vergleich eine Identitätsübereinstimmung ergibt.

14. Verfahren nach einem der Ansprüche 10 bis 13, enthaltend das Ausgeben eines zweiten Schlüssels an die zweite Netzkomponente vom Prüfgerät und Verwenden des zweiten Schlüssels bei der zweiten Netzkomponente und der ersten Netzkomponente in folgenden verschlüsselten Kommunikationen zwischen ihnen.

15. Computerprogrammprodukt, das ein Computerprogrammmittel enthält, in dem Anweisungen enthalten sind, die auf einem oder mehreren Computer (n) ausführbar sind, um das Verfahren nach einem der Ansprüche 10 bis 14 zu implementieren.

16. Ein oder mehrere Computer, der bzw. die mit dem Computerprogrammmittel programmiert ist bzw. sind, das Anweisungen enthält, die bei Ausführung das Verfahren nach einem der Ansprüche 10 bis 14 implementieren.

17. Netz von Computern, die mit einem Computerprogrammmittel programmiert sind, das Anweisungen enthält, die bei Ausführung für die Implementierung des Verfahrens nach einem der Ansprüche 10 bis 14 ausgebildet sind.

## Revendications

1. Vérificateur destiné à vérifier l'authenticité d'une communication émise par l'intermédiaire d'un réseau de communications d'un premier composant de réseau à un deuxième composant de réseau, comprenant :
un moyen d'entrée conçu pour recevoir par l'intermédiaire du réseau de communications une communication cryptée en provenance dudit premier composant de réseau ;
un moyen générateur de clé ayant pour fonction de délivrer audit deuxième composant de réseau une clé associée au premier composant de réseau sous réserve que le vérificateur ait vérifié que la communication cryptée peut être décryptée en utilisant ladite clé pour ainsi permettre au deuxième composant de réseau de décrypter des communications cryptées envoyées par le premier composant de réseau indépendamment de l'appareil vérificateur.

2. Vérificateur selon l'une quelconque des revendications précédentes, dans lequel le vérificateur est conçu pour tenter de décrypter une communication cryptée reçue en utilisant une ou plusieurs clés stockées par celui-ci avant de recevoir la communication cryptée et de sélectionner la clé à délivrer parmi lesdites une ou plusieurs clés stockées.

3. Vérificateur selon l'une quelconque des revendications précédentes, ayant en outre pour fonction de délivrer de manière conditionnelle ladite clé audit deuxième composant de réseau en réponse à une demande envoyée à celui-ci par le deuxième composant de réseau afin de vérifier l'authenticité d'une communication cryptée provenant du premier composant de réseau.

4. Vérificateur selon la revendication 3, conçu en outre pour recevoir avec ladite communication cryptée des premières données d'identité identifiant le premier composant de réseau afin de recevoir dudit deuxième composant de réseau des deuxièmes données d'identité identifiant un composant de réseau faisant l'objet d'une demande de vérification, pour comparer les premières données d'identité aux deuxièmes données d'identité et pour délivrer ladite clé sous réserve que la comparaison révèle une concordance d'identité.

5. Vérificateur selon l'une quelconque des revendications précédentes, dans lequel le moyen générateur de clé est conçu pour délivrer au deuxième composant de réseau une deuxième clé destinée à être utilisée par le deuxième composant de réseau et le premier composant de réseau lors de communications cryptées ultérieures entre ceux-ci.

6. Vérificateur selon l'une quelconque des revendications précédentes, dans lequel le moyen générateur de clé est conçu pour délivrer au deuxième composant de réseau une troisième clé associée au premier composant de réseau afin qu'elle soit utilisée par celui-ci pour crypter des communications ultérieures devant être transmises au vérificateur.

7. Vérificateur selon l'une quelconque des revendications précédentes, conçu pour générer la clé en réponse à une demande de clé provenant du premier composant de réseau et pour communiquer la clé au premier composant de réseau afin qu'elle soit utilisée par celui-ci pour crypter des communications destinées au vérificateur et au deuxième composant de réseau.

8. Vérificateur selon la revendication 7, conçu pour générer la clé sur la base de justificatifs associés au premier composant de réseau auquel est ainsi fournie la demande de clé.

9. Réseau de communications comprenant un vérificateur selon l'une quelconque des revendications précédentes.

10. Procédé de vérification de l'authenticité d'une communication émise par l'intermédiaire d'un réseau de communications d'un premier composant de réseau à un deuxième composant de réseau, comprenant :
la réception par un vérificateur d'une communication cryptée émise par le premier composant de réseau par l'intermédiaire du réseau de communications ;
la vérification par le vérificateur du fait que la communication cryptée peut être décryptée au moyen d'une clé associée au premier composant de réseau ; puis,
la délivrance de la clé au deuxième composant de réseau pour ainsi permettre au deuxième composant de réseau de décrypter des communications cryptées émises par le premier composant de réseau indépendamment du vérificateur.

11. Procédé selon la revendication 10, comprenant le stockage d'une ou plusieurs clés par le vérificateur et la tentative au moyen de celle(s)-ci de décryptage de la communication cryptée reçue et la sélection de la clé délivrée parmi lesdites une ou plusieurs clés stockées.

12. Procédé selon l'une quelconque des revendications 10 à 11, comprenant la délivrance conditionnelle de la clé au deuxième composant de réseau en réponse à une demande du deuxième composant de réseau de vérification de l'authenticité d'une communication cryptée provenant du premier composant de réseau.

13. Procédé selon la revendication 12, comprenant la réception avec ladite communication cryptée de premières données d'identité identifiant le premier composant de réseau, la réception par le vérificateur de deuxièmes données d'identité du deuxième composant de réseau identifiant un composant de réseau faisant l'objet d'une demande de vérification, la comparaison par le vérificateur des premières données d'identité avec les deuxièmes données d'identité et la délivrance de la clé sous réserve que la comparaison révèle une concordance d'identité.

14. Procédé selon l'une quelconque des revendications 10 à 13, comprenant la délivrance au deuxième composant de réseau d'une deuxième clé par le vérificateur et l'utilisation de la deuxième clé par le deuxième composant de réseau et le premier composant de réseau lors de communications cryptées ultérieures entre ceux-ci.

15. Produit de programme informatique contenant un moyen de programmation d'ordinateur comprenant des instructions pouvant être exécutées sur un/des ordinateur(s) pour mettre en oeuvre le procédé selon l'une quelconque des revendications 10 à 14.

16. Un ou plusieurs ordinateurs programmés avec un moyen de programmation d'ordinateur comprenant des instructions conçues, lorsqu'elles sont exécutées, pour mettre en oeuvre le procédé selon l'une quelconque des revendications 10 à 14.

17. Réseau d'ordinateurs programmés avec un moyen de programmation d'ordinateur comprenant des instructions conçues, lorsqu'elles sont exécutées, pour mettre en oeuvre le procédé selon l'une quelconque des revendications 10 à 14.
